(19) Europäisches Patentamt
European Patent Office
Office européen des brevets

(11) **EP 1 895 780 A2**

(12) **EUROPEAN PATENT APPLICATION**

(43) Date of publication:
**05.03.2008 Bulletin 2008/10**

(51) Int Cl.:
***H04N 7/52*** *(2006.01)*

(21) Application number: **07253424.1**

(22) Date of filing: **30.08.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **30.08.2006 US 513567**

(71) Applicant: **ADVANCED MICRO DEVICES, INC.
Sunnyvale,
CA 94088-3453 (US)**

(72) Inventors:
  • **Rajagopal, Ravikiran
    Yardley
    Pennsylvania 19067 (US)**
  • **Touzni, Azzedine
    Doylestown
    Pennsylvania 18901 (US)**

(74) Representative: **Crump, Julian Richard John et al
Mintz Levin Cohn Ferris Glovsky & Popeo
Intellectual Property LLP
The Rectory
9 Ironmonger Lane
London EC2V 8EY (GB)**

(54) **Frame synchronization for a video receiver**

(57)     An integrated circuit chip includes a frame synchronization module for use with a Fourier transform module and an equalizer, the frame synchronization module configured to: receive an indication of a channel response from the equalizer; compute a power spectrum of an incoming video signal by applying spectral analysis to the video signal; determine a particular sample point in the power spectrum with a higher energy level than other sample points in the power spectrum; and send an indication of the position of the determined sample point relative to an initial sample point of the power spectrum to the Fourier transform module.

FIG. 1

**EP 1 895 780 A2**

Printed by Jouve, 75001 PARIS (FR)

**Description**

Today, many forms of information are sent from information sources such as television content providers, to receivers, such as televisions in people's homes. Thus, an example of such information is digital television (DTV) information. Transmitting digital information typically involves converting the digital information to an analog signal and modulating an RF (radio frequency) carrier frequency's amplitude and/or phase using the analog signal, and sending the modulated signal over a propagation medium, such as air, towards a receiver.

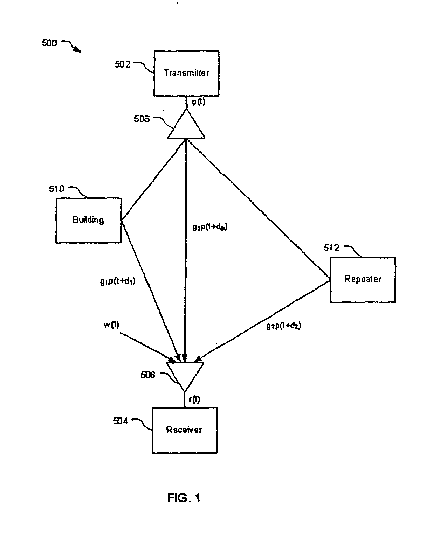

Referring to FIG. 1, a communications system 500 includes a transmitter 502 and a receiver 504. The transmitter 502 and the receiver 504 have respective antennas 506, 508, here shown externally to the transmitter 502 and the receiver 504, although the antennas 506, 508 may be considered to be parts of the transmitter 502 and the receiver 504. The transmitter 502 is configured to send information over a propagation medium, here a terrestrial broadcast system, to the receiver 504. Transmitting information over the propagation medium introduces signal distortion caused by noise w(t) (e.g., static), strength variations (fading), phase shift variations, multiple path delays, etc. Multiple path delays result from the transmitted signals taking different paths between the transmitter and receiver through the propagation medium, e.g., due to reflections off buildings 510 and/or relay through repeater stations 512. Different paths of a transmitted signal p(t) result in different gains $g_0$, $g_1$, $g_2$, and different delay times $d_0$, $d_1$, $d_2$ that cause replicas $p_1(t)$ = $g_1 p(t+d_1)$, $p_2(t)$ = $g_2 p(t+d_2)$ of the signal p(t) to arrive at different times at the receiver 504 (like an echo) compared to the directly-transmitted signal $p_0(t)$ = $g_0 p(t+d_0)$. The received signal r(t) is a combination of multiple signals comprising the directly-transmitted signal and/or the replicas, if any. Multi-path distortion results in inter-symbol interference (ISI) in which weighted contributions of other symbols are added to the current symbol, and/or interchannel interference in which separate sub-carriers interfere with each other. Noise and/or interference in the signal r(t) can also come from other sources such as the transmitter. These effects can cause errors in the transfer and/or interpretation of information from the transmitter 502 to the receiver 504. When a bit error rate (BER) of a system exceeds a threshold and overcomes the error tolerance of the system, the system fails.

Orthogonal Frequency Division Multiplexing (OFDM) can be used to transmit multiple data signals, e.g., DTV signals, over the propagation medium. OFDM systems transmit a signal, such as a television signal, in parallel over one or more sub-carriers, simultaneously in each time slot in each sub-carrier. Each sub-carrier is located at a different portion of a frequency spectrum used to transmit the DTV signals. The spacing of the sub-carriers is such that each sub-carrier's frequency is orthogonal to each of the other sub-carriers' frequencies (e.g., frequency spacing of the sub-carriers is substantially equal to the inverse of an OFDM symbol duration). The orthogonality of the sub-carrier frequencies provides a higher resistance to RF interference and multi-path distortion than when non-orthogonal frequencies are used as sub-carriers. Each sub-carrier includes, for example, data symbols, pilot symbols, and/or Transmission Parameter Signals (TPS) symbols, which are a special type of data symbol. The pilot symbols are predetermined known signals used to help a receiver estimate transmission channels.

Once an OFDM signal (e.g., r(t)) is received by the receiver 504, channel estimation and equalization are used to cancel the effects of the distortion on the transmitted signal (e.g., p(t)). For example, because r(t) is a linear combination of the signals $p_0(t)$, $p_1(t)$, and $p_2(t)$, a specific mathematical function (i.e., a transfer function) can describe the relation of p(t) to r(t). Once the transfer function of the propagation medium is known, a filter that is approximately the inverse of the transfer function of the propagation medium can be used to reduce the effects of the distortion introduced by the propagation medium. Because the propagation medium is constantly changing (e.g., objects that create multi-path errors can move, weather can change, noise levels can change, etc.), the transfer function of any given propagation medium is also constantly changing. When the propagation medium is changing quickly, r(t) becomes a "fast fading" transmission channel, which can increase the complexity of the estimation process. "Long channels" occur when the propagation medium has a long delay spread. For example, if the distance that the signal $p_2(t)$ travels to reach the receiver 504 is sufficiently long compared to the signal $p_0(t)$, a symbol in the signal $p_2(t)$ may arrive at the receiver 504 after the same symbol arrives via the signal $p_0(t)$, thus creating ISI.

In general, in an aspect, the invention provides a video receiver including: a Fourier transform module configured to receive a video signal comprising samples of video, the transform module being configured to apply a Fourier transform to a window of a plurality of samples of the video signal to provide a frequency-domain video signal; an equalizer coupled to the Fourier transform module and configured to process the frequency-domain video signal to determine a channel response of a transmission channel over which the receiver receives incoming signals; and a frame synchronization module coupled to the equalizer and the transform module; where at least one of the equalizer and the trame synchronization module is configured to apply spectral analysis to determine a power spectrum of the frequency-domain signal; where the frame synchronization module is configured to transform the power spectrum into a time-domain power spectrum, use the channel response to determine a sample offset, if any, between an initial sample and a sample having an energy level meeting at least one criterion, and to provide an indication of the sample offset to the transform module; and where the transform module is configured to adjust a relative position, in samples, of the window based upon the indication of the sample offset from the frame synchronization module.

Implementations of the invention may include one or more of the following features. The at least one criterion is that the energy level is at a particular energy level relative to energy levels of other samples. The at least one criterion is that the energy level is higher than the energy levels of all other samples in the window. The frame synchronization module is configured to determine the power spectrum. The frame synchronization module is configured to at least one of: apply an averaging filter to the power spectrum; remove noise from the power spectrum if a signal-to-noise ratio is known; and apply smoothing to the power spectrum. The frame synchronization module is configured to remove noise by applying a Fourier transform to a noise power estimate and subtracting the transformed noise power estimate from the power spectrum. The frame synchronization module is configured to smooth the power spectrum by at least one of averaging power spectrum samples and regularizing the power spectrum.

In general, in another aspect, the invention provides an integrated circuit chip including a frame synchronization module for use with a Fourier transform module and an equalizer, the frame synchronization module configured to: receive an indication of a channel response from the equalizer; compute a power spectrum of an incoming video signal by applying spectral analysis to the video signal; determine a particular sample point in the power spectrum with a higher energy level than other sample points in the power spectrum; and send an indication of the position of the determined sample point relative to an initial sample point of the power spectrum to the Fourier transform module.

Implementations of the invention may include one or more of the following features. The frame synchronization module is configured to determine as the particular sample point, the sample point with the highest energy level of any of the sample points in the power spectrum. The frame synchronization module is configured to at least one of: apply an averaging filter to the power spectrum; remove noise from the power spectrum if a signal-to-noise ratio is known; and apply smoothing to the power spectrum. The frame synchronization module is configured to remove noise by applying a Fourier transform to a noise power estimate and subtracting the transformed noise power estimate from the power spectrum. The frame synchronization module is configured to smooth the power spectrum by at least one of averaging power spectrum samples and regularizing the power spectrum. The frame synchronization module is configured to compute a power spectrum of an incoming OFDM video signal.

In general, in another aspect, the invention provides a method of frame synchronization in an video system, the method including: receiving, at a video receiver, a video signal comprising samples of video over a transmission channel; applying a Fourier transform to a window of a plurality of samples of the video signal to provide a frequency-domain video signal; determining, using the frequency-domain video signal, a channel response of a transmission channel; applying spectral analysis to the video signal to compute a power spectrum of the video signal; determining a particular sample point in the power spectrum with a higher energy level than other sample points in the power spectrum; and adjusting, as appropriate, a starting position of the Fourier transform window based upon a position of the determined sample point relative to an initial sample point of the power spectrum.

Implementations of the invention may include one or more of the following features. The starting position is adjusted only if a position in the window of the particular sample is other than a beginning of the window. Determining the particular sample point includes determining the sample point with the highest energy level of any of the sample points in the window. The method further includes at least one of: applying an averaging filter to the power spectrum; removing noise from the power spectrum if a signal-to-noise ratio is known; and applying smoothing to the power spectrum. The method further includes, at a video transmitter: determining values of an end portion of an OFDM symbol data portion of an OFDM symbol of length equal to a guard portion of the OFDM symbol; writing the determined values of the end portion into the guard portion of the OFDM symbol to produce a modified symbol; and transmitting the modified symbol to the video receiver as part of the video signal.

Various aspects of the invention may provide one or more of the following capabilities. Frame synchronization can be provided for OFDM systems. OFDM frame synchronization in high-Doppler, high-noise channels can be better provided than with existing techniques. OFDM frame synchronization can be better provided in time varying channels than with existing techniques. More criteria may be considered than with existing techniques for centering a channel power window. Criteria used for frame synchronization may be dynamically changed, e.g., according to channel conditions, to align channel power at the beginning of a guard interval, to increase (and possibly maximize) power within the guard interval.

Following is a description by way of example only with reference to the accompanying drawings of embodiments of the present invention.

In the drawings:

FIG. 1 is a schematic diagram of a transmission channel.
FIG. 2 is a block diagram of a baseband OFDM system including a transmitter and a receiver.
FIG. 3 is a block diagram of an illustrative symbol with a cyclic prefix portion and a data portion.
FIG. 4 is a block flow diagram of a process of processing OFDM information.
FIG. 5 is a process for performing frame synchronization.

Embodiments of the invention provide techniques for identifying OFDM symbol boundaries. For example, a receiver is configured to apply spectral analysis and circular Fourier transforms to identify symbol boundaries. A guard portion of a symbol is replaced with an end portion of symbol data equal in length to the guard portion. Spectral analysis of frequency-domain channel response is applied to determine a power spectrum of a channel and the power spectrum is analyzed, e.g., for an energy maximum, to determine a preferred location of a channel power window for applying a Fourier transform to determine symbol data. Other embodiments are within the scope of the invention.

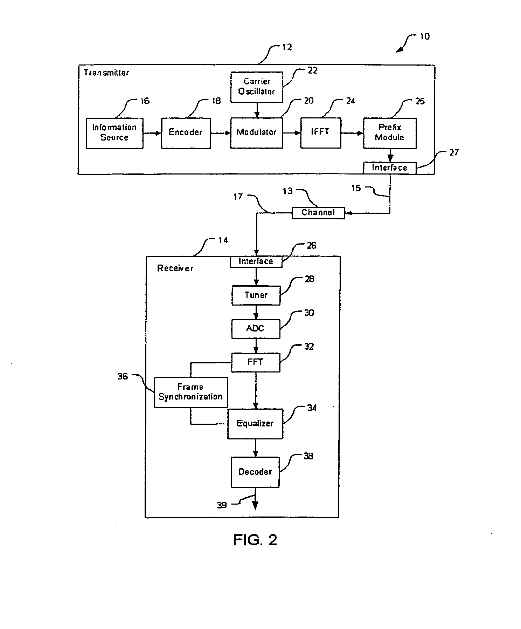

Referring to FIG. 2, a communication system 10 comprises a transmitter 12 and a receiver 14. The system 10 includes appropriate hardware, firmware, and/or software (including computer-readable, preferably computer-executable instructions) to implement the functions described below. The transmitter 12 may be, e.g., a terrestrial or cable information provider such as a cable television provider, and the receiver 14 is a corresponding device (e.g., a digital television such as a high-definition television, or a set-top box and television combination) for receiving the transmitted information. The transmitter 12 and the receiver 14 are linked by a transmission channel 13. The transmission channel 13 is a propagation medium such as the atmosphere (in the case of a terrestrial broadcast), although other propagation mediums are possible (e.g., a cable with appropriate transmitters and receivers being used). The transmitter 12 is configured to convert a source information signal and to broadcast an OFDM signal 15 towards the receiver 14. The transmission channel 13 can affect the signal sent from the transmitter 12 and transform it into a signal 17. The receiver 14 is configured to receive the signal 17 and to produce a signal 39, which is preferably substantially equal to the source information signal.

The transmitter 12 includes an information source 16, an encoder 18, a modulator 20, a carrier oscillator 22, an inverse fast Fourier transform (IFFT) module 24, a prefix module 25, and an interface 27. The information source 16 provides information such as television signals, video, audio, or data (e.g., Internet communications). The encoder 18 is connected to the source 16 and the modulator 20 and is configured to encode information from the source and provide the encoded information to the modulator 20. The modulator 20 is connected to the oscillator 22 and the IFFT module 24 and is configured to use carrier frequency signals from the oscillator 22 to modulate the encoded information from the encoder 18 and provide the modulated information to the IFFT module 24. The IFFT module 24 is configured to convert the modulated signal to time domain and send the encoded, modulated information from the modulator 20 toward the prefix module 25. The prefix module is configured to alter symbols received from the IFFT module 24 and to provide the modified symbols to the interface 27. The interface 27 may be an antenna for terrestrial transmitters, or cable interface for a cable transmitter, etc.

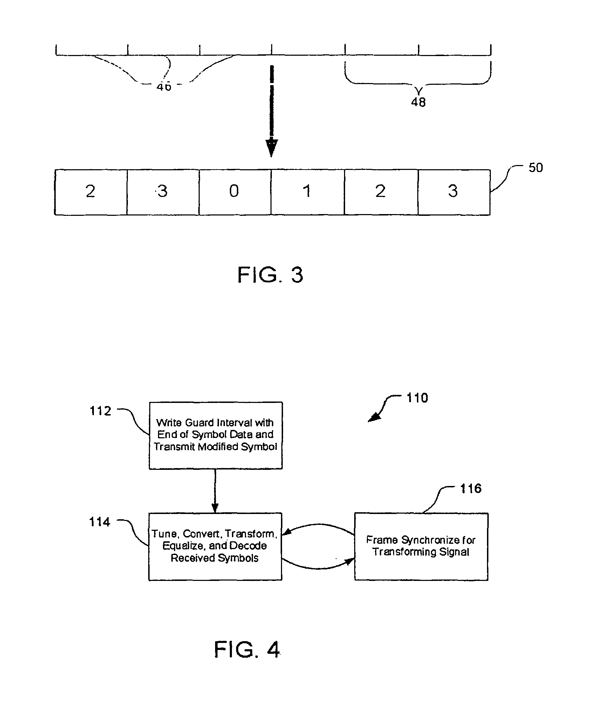

Referring also to FIG. 3, the prefix module 25 is modify symbols received from the IFFT module 24 by copying end portion of data portions of the symbols into guard portions of the symbols. The module 25 is configured to analyze a symbol 40, comprising a guard portion 42 (that lasts a guard interval duration $t_g$) and a data portion 44 (that lasts a symbol data duration $t_s$), to determine values of information pieces 46 of an end portion 48 of the data portion 44 that is equal in size/length to the guard portion 42. The module 25 is further configured to insert/write the values of the information pieces 46 of the end portion 48 into/as the information pieces 46 corresponding to the guard portion 42 (i.e., the cyclic prefix portion of the symbol 40) to produce a modified symbol 50. This may entail writing otherwise empty data slots. The transmitter 12 conveys the modified symbols 50 to the receiver 14. Values and the size shown in FIG. 3 for the symbol 40 and the modified 50 are exemplary only and provided for illustrative purposes. Other values will typically be present in the symbols 40, 50, and the size of the symbols 40, 50 will be other than that shown. For example, although also not limiting of the invention, DVB symbols could have data portions 44 that are 8192 samples long. Further, the invention may be used for guard interval data that are not cyclic prefix data, e.g., where the guard interval contains a known sequence of data that is unlikely to occur in the symbol 40.

The receiver 14 is configured to receive information from the transmitter 12 and process the received information to provide the information in a desired format, e.g., as video, audio, data. The receiver 14 includes an interface 26, a tuner 28, an analog-to-digital converter (ADC) 30, an FFT module 32, an equalizer 34, a frame synchronization module 36, and a decoder 38. Portions of the receiver, e.g., the devices 32, 34, 36, 38 may be implemented as algorithms executed by a controller, e.g., a microcontroller/microprocessor, is configured to read software code instructions stored in memory and to perform operations, as described herein, in accordance with those instructions.. The receiver 14 is preferably implemented using a semiconductor integrated circuit chip including appropriate circuitry.

The interface 26, the tuner 28, and the ADC 30 are configured to pre-process the incoming signal for conversion to frequency domain, removal of channel effects, and decoding of symbol data in the incoming signal. The interface 26 is configured to receive information over the communication medium 13 (e.g., a cable, wireless transmission medium, etc.) from the transmitter 12 and to provide the received information to the tuner 28. The tuner 28 is configured to remove the carrier frequencies from the incoming signal and provide the resulting signal to the ADC 30. The ADC 30 is configured to convert the analog signals received from the tuner 28 into digital equivalents and provide these to the FFT module 32.

The FFT module 32 is configured to convert received signals to the frequency domain by applying an FFT to frames of the incoming signals. The FFT module 32 performs an FFT on the signal from the ADC 30 in sets of symbol durations. The FFT module 32 is configured to receive indicia from the frame synchronization module 36 to determine where in time to begin to apply the FFT of duration $t_s$, i.e., the known duration of symbol data, and to provide the frequency-domain signals to the equalizer 34. The equalizer 34 is configured to use known techniques to determine estimates of a transfer function of the channel 13 and provide these estimates to the frame synchronization module 36. The equalizer 34 is further configured to compensate for distortion and noise in the information passed to the equalizer 34 and to determine and pass estimates of the transmitted symbols to the decoder 38. The decoder 38 is configured to decode the symbol estimates to recover original information encoded by the transmitter 12 prior to transmission, and to render the information in an appropriate format as the signal 39.

The frame synchronization module 36 is configured to process information provided by the equalizer 34 to determine a relative position in time in the signal coming in to the FFT module 32 to begin applying the FFT for the symbol data duration $t_s$. The module 36 is configured to initially select a starting point for the FFT and then determine an adjustment to the selected starting point in accordance with the following discussion. The received signal in an OFDM receiver may be represented as follows:

$$y=h*x+n \qquad (1)$$

where $y$ is the received signal, $h$ is the channel response, $x$ is the transmitted signal and $n$ is additive white Gaussian noise (AWGN), and * denotes convolution. At the equalizer 34, using standard techniques for OFDM, the received signal may be represented in the frequency domain as follows:

$$Y=HX+N \qquad (2)$$

where $H$ is a diagonal matrix if the length of the channel 13 in the time domain is bounded by the length $t_g$ of the guard interval for the cyclic prefix. Assuming that the transmitted signal $X$ is approximately white, the power spectrum of $Y$ can be interpreted as the channel power profile if the noise $N$ is relatively low. Ignoring, for the moment, the noise $N$, the power spectrum of $HX$ can be computed from $Y$ in a manner that provides immunity to noise (via averaging, for example). The frame synchronization module 36 is configured to determine $C$, the power spectrum of $Y$. The module 36 can determine the power spectrum $C$ using various techniques. Currently-known techniques that could be employed by the module 36 to determine $C$ include:

1. Periodogram/correlogram (provides excellent noise immunity through averaging)
2. Windowed nonparametric methods, including, but not limited to

    i. Bartlett window method
    ii. Blackman-Tukey window method
    iii. Welch window method
    iv. Daniel window method

3. Parametric modeling as ARMA processes (as the channel 13 may not be state) using techniques such as the Yule-Walker method.
4. If the number of paths can be estimated, line spectrum methods such as, but not limited to, the following can also be used:

    i. MUSIC
    ii. ESPRIT

Further, a description of spectral analysis is provided by P. Stoica and R. Moses, Introduction to spectral analysis, Prentice Hall, 1997. Given C as determined through spectral analysis, then the module 36 can compute an estimate of the synchronization mismatch (in terms of distance, in number of samples, from the largest channel power window) from C according to:

$$m = \mathop{\arg\max}_{m \in [-N_s/2, N_s/2]} \sum_{l=0}^{N_g-1} C[m+l] \qquad (3)$$

where *Ns* and *Ng* denote the symbol and guard lengths respectively. The estimate can be used to perform frame synchronization and can be used either directly or with a bias to decrease its variance. The frame synchronization module 36 is configured to provide an indication to the FFT module 32 of an appropriate adjustment, if any, to the relative starting time of the FFT performed by the FFT module 32. The module 32 can adjust its FFT window in accordance with the adjustment indicated by the frame synchronization module 36.

In operation, referring to FIG. 4, with further reference to FIGS. 1-3, a process 110 for processing OFDM information using the system 10 includes the stages shown. The process 110, however, is exemplary only and not limiting. The process 110 may be altered, e.g., by having stages added, removed, or rearranged.

At stage 112, the prefix module 25 alters the prefix of the symbol 40 to produce the modified symbol 50. Information is provided by the source 16, encoded by the encoder 18, modulated by the modulator 20 using signals from the carrier oscillator 22, inverse Fourier transformed by the module 24, and provided to the prefix module 25. The prefix module 25 determines the last pieces 46 of the symbol 40 of length equal to the cyclic prefix length of the symbol 40. The module 25 writes to the cyclic prefix 42 of the symbol 40 with the end portion 48 to form the modified symbol 50. The modified symbol 50 is sent to the receiver 14 via the interface 27, the channel 13, and the interface 26.

At stage 114, the transmitted signals from the transmitter 12 are received and processed by the receiver 14. The signals are tuned by the tuner 28, converted from analog to digital by the ADC 30, Fourier transformed by the FFT module 32, noise and distortion compensated by the equalizer 34, and decoded by the decoder 38.

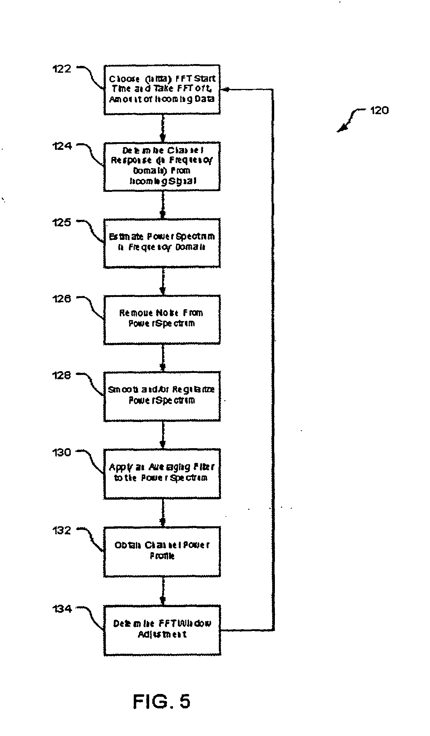

In conjunction with stage 114, at stage 116, the frame synchronization module 36 determines FFT window adjustments. The module 36 determines whether and how much to adjust a window used by the FFT module 32 to apply a Fourier transform to received signals for determining incoming symbol data. The module 36 determines these adjustments in accordance with a process described with respect to FIG. 5.

In operation, referring to FIG. 5, with further reference to FIGS. 1-4, a process 120 for performing frame synchronization using the system 10 includes the stages shown. The process 120, however, is exemplary only and not limiting. The process 120 may be altered, e.g., by having stages added, removed, or rearranged. For example, stage 126 discussed below may be removed, e.g., if not desired to be performed or if a signal-to-noise ratio is unknown. Further, stage 128 may be removed, e.g., if noise is not undesirably high, or if a channel power spectrum is acceptable. Further still, stage 130 may be removed as desired. As a further example, stage 125 may be combined with stage 130, especially if stages 126 and 128 are removed.

At stage 122, a start time for performing a Fourier transform on a signal received by the FFT module 32 is selected. If this is the first performance of the process 120, then the start time is an initial start time. The frame synchronization module 36 chooses an initial start time $t_k$ for taking an FFT of the incoming signal. This initial start time can be chosen using various techniques known in the art such as maximum correlation, maximum likelihood, or minimum mean square estimation (MMSE) (see S. H. Muller-Weinfurtner, "On the optimality of metrics for coarse frame synchronization in OFDM: A comparison," in Proc. Int. Symp. Personal, Indoor and Mobile Radio Communications Boston, MA, vol. 2, 1998, pp. 533-537.). If a start time has previously been chosen, then the currently-chosen start time can be the same as the previously-chosen time or a new start time. The frame synch module 36 instructs the FFT module 32 to use the chosen time, and the FFT module 32 takes the FFT of the incoming signal, starting from the chosen time and extending for a window of time equal to $t_s$, the duration of the symbol data portion 44, i.e., from $t_k$ until $t_k + t_s$.

At stage 124, the equalizer 34 determines the transfer function of the channel 13. The equalizer 34 uses the Fourier-transformed information from the FFT module 32 to determine the channel response in the frequency domain using known techniques (e.g., using pilot signals in the received signal). The equalizer 34 provides the channel transfer function to the frame synchronization module 36.

At stage 125, the frame synchronization module 36 estimates the power spectrum of the incoming signal. Knowing the channel transfer function, $t_g$, and $t_s$, the frame synch module 36 applies spectral analysis (e.g., any of the spectral analysis techniques noted above) in the frequency domain to determine the power spectrum of the received signal Y in the frequency domain.

At stage 126, the frame synch module 36 removes noise from the power spectrum. The module 36 uses a known signal-to-noise ratio (SNR) to compute the FFT of a noise power estimate and removes the noise from each component of the computed power spectrum by subtracting the noise power estimate from the power spectrum.

At stage 128, the frame synch module 36 smoothes the computed power spectrum of the incoming signal. If noise is undesirably high, and the estimate of the channel power spectrum is poorer than desired (e.g., if a signal-to-noise ratio exceeds an application-specific threshold), then the module 36 will average the power spectrum *C* by replacing a value of a selected sample with the average of the selected sample and surrounding samples (e.g., two samples on either side of the selected sample). Alternatively, the module 36 may apply median filtering to replace a sample with the median of that sample and surrounding samples, or may apply other known techniques. Further, the module 36 regularizes the power spectrum *C* if the low-power portion of the spectrum is undesirable while the higher-power portion of the spectrum is acceptably high. The module 36 regularizes the spectrum, for example, by dividing the power spectrum by 1 + the lowest sample value in the power spectrum *C*. This weights the power spectrum *C*, with less weight being given to low power parts and more weight to high power parts.

At stage 130, the frame synchronization module 36 multiplies the power spectrum C by an averaging filter. The module 36 takes the FFT of an averaging filter, e.g., a set of 1's of length $t_g$, and multiplies this by the power spectrum $C$.

At stage 132, the module 32 obtains the channel power profile. The module 32 takes the inverse FFT of the power spectrum as averaged, smoothed, regularized, and filtered in stages 126, 128, and 130.

At stage 134, the frame synch module 36 determines an adjustment in the timing of the FFT window used by the FFT module 32. The module 36 determines a desirable energy sample, preferably an energy sample extrema (maximum or minimum). Preferably, the module 36 selects the sample having the highest energy using equation (3) above. The module 36 determines an offset between the sample number of the sample with the extreme, preferably highest, energy level and the sample number of the sample currently (be it initially or lastly/most recently) indicated by the frame synch module 36 to the FFT module 32 to use as the starting position for applying an FFT. This offset can be indicated directly by the sample number determined as the extreme-energy-level sample as the currently-indicated sample is used as a baseline for determining the location of the extreme-energy-level sample. The frame synch module 36 sends an indication of the offset to the FFT module 32 such that the FFT module 32 can alter, at stage 122, the starting position of the next application of the FFT (either forward or backward in time relative to the currently-indicated sample position) in accordance with the offset/adjustment indicated by the module 36.

The process 120 can be repeated to compensate for movement in a desired location in time of the window to be used for the FFT. The process 120 returns to stage 122 and the frame synch module 36 can repeatedly (e.g., periodically) determine the sample location with an energy extreme and indicate to the FFT module 32 to adjust its FFT starting sample as appropriate to a new current sample position.

The processes 110, 120 shown in FIGS. 4-5 provide desirable performance with respect to desired metrics such as bit error rate, average signal-to-noise ratio, and resistance to high Doppler frequencies. The processes 110, 120 can be applied to static multi-path channels or dynamic multi-path channels. Table 1 below shows simulated performance of the processes 110, 120 compared to other techniques for an exemplary case of a DVB 2k mode channel.

**TABLE 1**

| Technique | Maximum Doppler (Hz) | Accuracy (Samples) | Symbols Used |
|---|---|---|---|
| Standard | 400 | 22 | 16 |
| Palin/Rinne | 60 | 128 | 2 |
| Processes 110, 120 | 600+ | 5 | 1 |

The Standard technique is described in M. Speth, S. A. Fechtel, G. Fock and H. Meyr, Optimum receiver design for wireless broad-band systems using OFDM - Part I, IEEE Transactions on Communications, pp 1668-1677, Vol. 47, No. 11, Nov 1999, and the Palin/Rinne technique is described in A. Palin and J. Rinne, Enhanced symbol synchronization method for OFDM system in SFN channels, Proc. IEEE GLOBECOM'98, pp. 2788-2793, Nov 1998. Also, the 128 samples for accuracy for the Palin/Rinne technique is a representative value as the Palin/Rinne technique varies significantly in the presence of multi-path Doppler.

Other embodiments are within the scope and spirit of the invention. For example, due to the nature of software, functions described above can be implemented using software, hardware, firmware, hardwiring, or combinations of any of these. Features implementing functions may also be physically located at various positions, including being distributed such that portions of functions are implemented at different physical locations. Further, the equalizer 34, instead of the frame synch module 36, may determine the power spectrum of the incoming signal, or the equalizer 34 and the module 36 may combine to determine the power spectrum. Also, the sample offset may be determined based on a sample with an energy level meeting one or more criteria that may or may not include being a maximum relative energy level compared to energy levels of other samples.

While the invention has been described in the context of the broadcast of digital television, the invention can be used in other mobile or wireless channels such as cellular communication, satellite communication, satellite radio broadcast, terrestrial radio broadcast, wireless networking (e.g., WiFi), multi-carrier CDMA communications systems, etc.

Further, while the description above refers to the invention, the description may include more than one invention.

**Claims**

1. A video receiver comprising:

a Fourier transform module configured to receive a video signal comprising samples of video, the transform module being configured to apply a Fourier transform to a window of a plurality of samples of the video signal to provide a frequency-domain video signal;

an equalizer coupled to the Fourier transform module and configured to process the frequency-domain video signal to determine a channel response of a transmission channel over which the receiver receives incoming signals; and

a frame synchronization module coupled to the equalizer and the transform module;

wherein at least one of the equalizer and the frame synchronization module is configured to apply spectral analysis to determine a power spectrum of the frequency-domain signal;

wherein the frame synchronization module is configured to transform the power spectrum into a time-domain power spectrum, use the channel response to determine a sample offset, if any, between an initial sample and a sample having an energy level meeting at least one criterion, and to provide an indication of the sample offset to the transform module; and

wherein the transform module is configured to adjust a relative position, in samples, of the window based upon the indication of the sample offset from the frame synchronization module.

2. The receiver of claim 1 wherein the at least one criterion is that the energy level is at a particular energy level relative to energy levels of other samples.

3. The receiver of claim 2 wherein the at least one criterion is that the energy level is higher than the energy levels of all other samples in the window.

4. The receiver of claim 1 wherein the frame synchronization module is configured to determine the power spectrum.

5. The receiver of claim 1 wherein the frame synchronization module is configured to at least one of: apply an averaging filter to the power spectrum; remove noise from the power spectrum if a signal-to-noise ratio is known; and apply smoothing to the power spectrum.

6. The receiver of claim 5 wherein the frame synchronization module is configured to remove noise by applying a Fourier transform to a noise power estimate and subtracting the transformed noise power estimate from the power spectrum.

7. The receiver of claim 5 wherein the frame synchronization module is configured to smooth the power spectrum by at least one of averaging power spectrum samples and regularizing the power spectrum.

8. An integrated circuit chip comprising a frame synchronization module for use with a Fourier transform module and an equalizer, the frame synchronization module configured to:

receive an indication of a channel response from the equalizer;

compute a power spectrum of an incoming video signal by applying spectral analysis to the video signal;

determine a particular sample point in the power spectrum with a higher energy level than other sample points in the power spectrum; and

send an indication of the position of the determined sample point relative to an initial sample point of the power spectrum to the Fourier transform module.

9. The chip of claim 8 wherein the frame synchronization module is configured to determine as the particular sample point, the sample point with the highest energy level of any of the sample points in the power spectrum.

10. The chip of claim 8 wherein the frame synchronization module is configured to at least one of: apply an averaging filter to the power spectrum; remove noise from the power spectrum if a signal-to-noise ratio is known; and apply smoothing to the power spectrum.

11. The chip of claim 10 wherein the frame synchronization module is configured to remove noise by applying a Fourier transform to a noise power estimate and subtracting the transformed noise power estimate from the power spectrum.

12. The chip of claim 8 wherein the frame synchronization module is configured to smooth the power spectrum by at least one of averaging power spectrum samples and regularizing the power spectrum.

13. The chip of claim 8 wherein the frame synchronization module is configured to compute a power spectrum of an incoming OFDM video signal.

14. A method of frame synchronization in an video system, the method comprising:

receiving, at a video receiver, a video signal comprising samples of video over a transmission channel;
applying a Fourier transform to a window of a plurality of samples of the video signal to provide a frequency-domain video signal;
determining, using the frequency-domain video signal, a channel response of a transmission channel;
applying spectral analysis to the video signal to compute a power spectrum of the video signal;
determining a particular sample point in the power spectrum with a higher energy level than other sample points in the power spectrum; and
adjusting, as appropriate, a starting position of the Fourier transform window based upon a position of the determined sample point relative to an initial sample point of the power spectrum.

15. The method of claim 14 wherein the starting position is adjusted only if a position in the window of the particular sample is other than a beginning of the window.

16. The method of claim 14 wherein determining the particular sample point comprises determining the sample point with the highest energy level of any of the sample points in the window.

17. The method of claim 14 further comprising at least one of: applying an averaging filter to the power spectrum; removing noise from the power spectrum if a signal-to-noise ratio is known; and applying smoothing to the power spectrum.

18. The method of claim 14 further comprising, at a video transmitter:

determining values of an end portion of an OFDM symbol data portion of an OFDM symbol of length equal to a guard portion of the OFDM symbol;
writing the determined values of the end portion into the guard portion of the OFDM symbol to produce a modified symbol; and
transmitting the modified symbol to the video receiver as part of the video signal.

500

502 — Transmitter

p(t)

506

510 — Building

$g_0 p(t+d_0)$

512 — Repeater

$g_1 p(t+d_1)$

w(t)

$g_2 p(t+d_2)$

508

r(t)

504 — Receiver

FIG. 1

FIG. 2

FIG. 3

FIG. 4

```
122 ─╮   ┌──────────────────┐
      │   │ Choose (initial) FFT Start │
      ╰──▶│ Time and Take FFT of t,    │◀─────────────┐
          │ Amount of Incoming Data    │              │
          └──────────────────┘              │                    ╭─ 120
                     │                                  │          ╱
                     ▼                                  │
124 ─╮   ┌──────────────────┐              │
      │   │ Determine Channel         │              │
      ╰──▶│ Response (in Frequency    │              │
          │ Domain) From              │              │
          │ Incoming Signal           │              │
          └──────────────────┘              │
                     │                                  │
                     ▼                                  │
125 ─╮   ┌──────────────────┐              │
      │   │ Estimate Power Spectrum  │              │
      ╰──▶│ In Frequency Domain      │              │
          └──────────────────┘              │
                     │                                  │
                     ▼                                  │
126 ─╮   ┌──────────────────┐              │
      │   │ Remove Noise From        │              │
      ╰──▶│ Power Spectrum           │              │
          └──────────────────┘              │
                     │                                  │
                     ▼                                  │
128 ─╮   ┌──────────────────┐              │
      │   │ Smooth and/or Regularize │              │
      ╰──▶│ Power Spectrum           │              │
          └──────────────────┘              │
                     │                                  │
                     ▼                                  │
130 ─╮   ┌──────────────────┐              │
      │   │ Apply an Averaging Filter │              │
      ╰──▶│ to the Power Spectrum    │              │
          └──────────────────┘              │
                     │                                  │
                     ▼                                  │
132 ─╮   ┌──────────────────┐              │
      │   │ Obtain Channel Power     │              │
      ╰──▶│ Profile                  │              │
          └──────────────────┘              │
                     │                                  │
                     ▼                                  │
134 ─╮   ┌──────────────────┐              │
      │   │ Determine FFT Window     │              │
      ╰──▶│ Adjustment               │──────────────┘
          └──────────────────┘
```

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **P. STOICA ; R. MOSES.** Introduction to spectral analysis. Prentice Hall, 1997
- **S. H. MULLER-WEINFURTNER.** On the optimality of metrics for coarse frame synchronization in OFDM: A comparison. *Proc. Int. Symp. Personal, Indoor and Mobile Radio Communications,* 1998, vol. 2, 533-537

- **M. SPETH ; S. A. FECHTEL ; G. FOCK ; H. MEYR.** Optimum receiver design for wireless broad-band systems using OFDM - Part I. *IEEE Transactions on Communications,* November 1999, vol. 47 (11), 1668-1677
- **A. PALIN ; J. RINNE.** Enhanced symbol synchronization method for OFDM system in SFN channels. *Proc. IEEE GLOBECOM'98,* November 1998, 2788-2793